# EUROPEAN PATENT APPLICATION

(11) **EP 2 413 542 A1**
(43) Date of publication of application: **01.02.2012**
(21) Application number: 10290431.5
(22) Date of filing: 30.07.2010
(51) Int. Cl.: H04L 12/56

(54) **Flow aware congestion avoidance method and system**

(71) Applicant: INSTITUT NATIONAL DE RECHERCHE EN INFORMATIQUE ET EN AUTOMATIQUE, 78153 Le ChesnayCédex (FR); Alcatel Lucent, 75007 Paris (FR)
(72) Inventor: Blanc, Alberto, 06600 Antibes (FR); Alouf Huet, Sara, 06600 Antibes (FR); Avrachenkov, Konstantin, 06160 Juan les Pins (FR); Post, Georg, 91620 Nozay (FR)
(74) Representative: Demulsant, Xavier

(57) **Abstract**

A method for packet flow-rate control within a network node (4) comprised within a packet-switched communication network connection linking a sender (1) to a receiver (2), the said method comprising the following steps
- computing the average arrival rate of packets since the last packet mark or drop event;
- sending a congestion signal to the sender as soon as the computed packet arrival rate is above a predefined target rate;
- repeating congestion signal sending until the sender receives at least a congestion signal and consequently reduces the sending rate.

## Description

### FIELD OF THE INVENTION

The invention relates generally to flows management through network nodes and more particularly to congestion avoidance through a network node within a packet-switched communication network.

### BACKGROUND OF THE INVENTION

A shared network node among a plurality of end users is usually faced to jointly carry a plurality of concurrent downloads of diverse traffic patterns ranging from short-lived connections - often called "mice" flows - to long-lived ones (large file transfers) - often called "elephants" flows. Emerging trends in network applications (Web navigation, instant messaging, electronic messaging, Peer-to-Peer, elearning, video conferencing, VolP, remote communication, online games) amplify as ever such matter.

In particular, these heterogeneous connections competing to be routed through a same network node challenge the network resources available thereon without any concern on fairness issue, making congestions inevitable. In fact, when demands of concurrent connections toward a network node exceed the availability of network resources thereon (bandwidth, input/output line-cards, and buffers capacities for example), the network node experiences congestion. It operates in high loss rate state (dropping and/or marking packets) causing damages for guaranteeing Quality-of-Service (QoS) and performances decrease.

Hence, as safeguard policy, overloads and bursts of traffic should be avoided as possible within network nodes.

To that end, different congestion control schemes have been described in the literature. One can mention TCP congestion control (TCP Reno) and Random Early Detection (RED) methods.

RED, the most widely deployed in current routers, maintains a long term average of the queue length (buffer occupancy) of a router using a low-pass filter. Then, it operates with regard to predefined thresholds:
- if this average queue length falls below a certain minimum threshold, all packets are admitted into the queue;
- if the average queue length exceeds a certain maximum threshold, all incoming packets are dropped; and
- if the queue length lies between the minimum and maximum thresholds, incoming packets are dropped/marked with a linearly increasing probability up to a maximum drop probability value.

Further versions of RED, namely an adaptive version, are proposed so as to self-adjust the critical parameters thereof and/or to stabilize the average queue length within buffers.

Nevertheless, diverse problems remain unsolved or even arise with congestion management within network nodes. In fact, up-to-date methods for dropping/marking packets on buffer overflow are frequently reduced to an Active Queue Management (AQM) procedure that drops - or better marks if Explicit Congestion Notification (ECN) is enabled - the packets before the buffer fills up.

In fact, more problems arise with regards to the sender-receiver of the carried traffic as they may
- use different algorithms (TCP Reno, Cubic, Compound TCP for example) and have different access rates (an optical access rate may be in the Gbps range for example);
- connect to end-points with round-trip times that differ by orders of magnitude; and
- open large numbers of connections in parallel, intending to (unfairly) boost their bandwidth share (for example, the application FlashGet permits such practice).

Moreover, up-to-date network nodes treat the packet-switched communications network traffic as equal and do not differentiate between mice and elephants flows (while short connections, generally, expect relatively faster service than long connections), nor distinguish between users' more or less aggressive rate-increase policies. In addition, current network nodes know nothing about the underlying round-trip time (RTT) of a traffic flow, while it is a crucial parameter for its dynamic.

Furthermore, several shortcomings of current congestion control methods remain manifestly perceptible as many parameters should be taken into account:
- the response time of ECN: the response delays of a flow to mark or drop signals are highly variable, depending on the round-trip time (RTT) and the aggressive dynamics of each connection;
- the number of active flows: the stability margins of tuned parameters vary over orders of magnitude with the changing number of active flows;
- the utilized network resources per flow: the high-bandwidth aggressive flows can introduce long time constants in the system, namely the cycle time between drops, which can be of the order of magnitude of the product between the RTT and the number of packets in flight;
- the elephants flows: the end-point TCP protocol accepts a growing number of various rate-increase algorithms to accelerate the high-bandwidth, long-distance flows. The problem is to tune the controller at the node level, as a function of the future ever more aggressive traffic profiles, mainly associated with elephants flows and novel elastic sender-rate controllers;
- the QoS: for QoS reasons, the queue sizes in routers should be kept small. The buffer occupancy no longer provides a reliable metric to define a control scheme. Instead, the data rate of flows or aggregates, or the percentages of link utilization, may become the preferred controllable quantities.

Accordingly, network nodes operating under variable traffic loads require smart flow rate control so as to avoid and/or mitigate congestion, while maximizing the network node throughput under QoS and fairness constraints.

Further, end-point devices support the Explicit Congestion Notification (ECN) bit, making it attractive to have a more graceful congestion management than drop-tail. This means a reliable, self-tuning version of preventive packet-marking in all highly loaded (intermediate) nodes, so that the total ratio of dropped packets can be greatly reduced, even for highspeed connections transferring large files. Instead of queue growth under incipient congestion, the monitored rates can become the primary controlled quantities.

One object of the present invention is to overcome at least some of the aforementioned problems and to offer advantages over the prior art.

Another object of the present invention is to provide a self-adaptive congestion avoidance method and system.

Another object of the present invention is to propose a router-assisted scheme for congestion avoidance.

Another object of the present invention is to provide a flow-aware congestion avoidance method able to maintain a shared network node at a good operating point by avoiding congestion thereon.

Another object of the present invention is to ameliorate the quality of service supported by a shared network node.

Another object of the present invention is that a shared network utilizes allocated resources thereof at its best for TCP traffic.

Another object of the present invention is to propose an algorithm able to maintain a network node at a fair state.

Another object of the present invention is to refine drop mechanisms while flow rates are kept under control.

### DESCRIPTION OF THE DRAWING

The objects, advantages and other features of the present invention will become more apparent from the following disclosure and claims. The following non-restrictive description of preferred embodiments is given for the purpose of exemplification only with reference to the accompanying drawings in which:
- figure 1 is a block diagram showing an illustrative embodiment ;
- figure 2 is a block diagram illustrating a UML state machine of an embodiment,
- figure 3 is a block diagram illustrating a fairness control loop of flows/aggregates.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

The present invention relates to a method for packet flow-rate control within a network node comprised within a packet-switched communication network connection linking a sender to a receiver, the method comprising the following steps
- computing the average arrival rate of packets since the last packet mark or drop event;
- sending a congestion signal to the sender as soon as the computed packet arrival rate is above a predefined target rate;
- repeating congestion signal sending until the sender receives at least a congestion signal and consequently reduces the sending rate.

The present invention further relates to a system for packet flow-rate control within a network node comprised within a packet-switched communication network connection linking a sender to a receiver, the system comprising an explicit congestion notification mark generator configured to
- compute the average arrival rate of packets since the last packet mark or drop event;
- send a congestion signal as soon as this rate is above a predefined target rate;
- repeat the congestion signal sending until the sender receives at least a congestion signal and reduces the sending rate.

The present invention further relates to a computer program product adapted to perform the method cited above.

While the invention is susceptible to various modifications and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those of ordinary skill in the art having the benefit of this disclosure.

### DETAILED DESCRIPTION OF ILLUSTRATIVE EMBODIMENTS

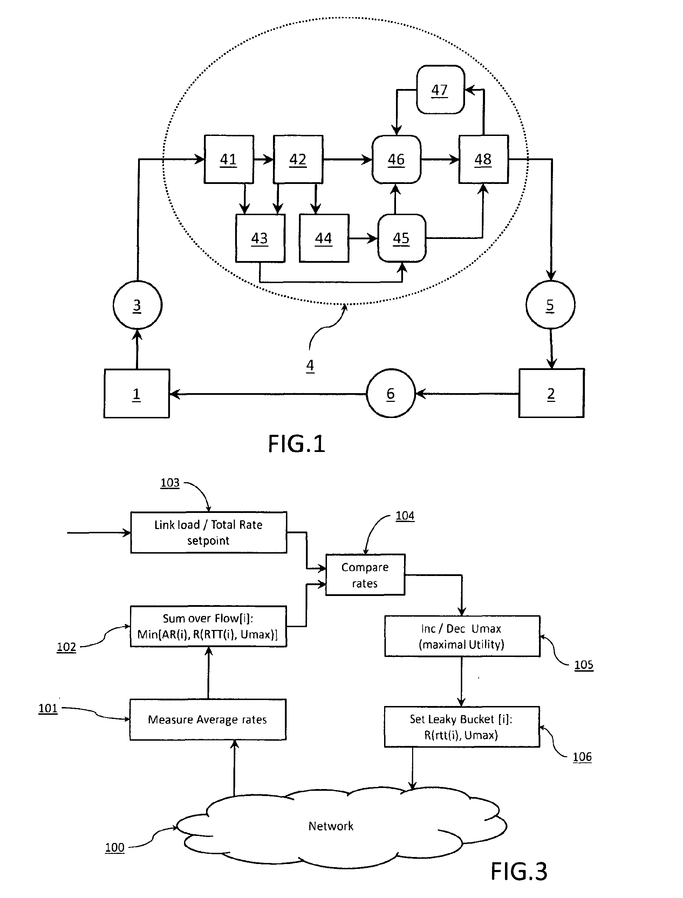

With reference to figure 1, there is shown, a sender 1 and a receiver 2 interconnected through a network connection (for example a TCP, UDP, DCCP, RTP, or SCTP connection, or more generally, any network connection including a protocol of the transport layer) involving a plurality of network nodes 3-6. We assume that at least a long-lived connection (an elephant flow) is established between the sender 1 and the receiver 2 and passes through the network node 4. A router, a switch, a gateway, a host, or a server are examples of the network node 4.

The node 4 comprises a flow-aware adaptive rate management system that includes:
- flows classification means 41 of individual flows or aggregates responsible for distinguishing flows on different quality of service classes;
- an elephant flow detector 42 permitting to make out elephants flows and store their respective state information such as their rate (by using token-bucket meters, packet counters, byte counters, packet times, or mark-event times for example);
- a metering module 43 configured to track the transmission rate of classified flows, including elephants ones, on a per-packet basis. Token buckets and different flow-rate meters may be used to measure the transmission rate of each flow;
- a Round-Trip Time (RTT) detector 44 responsible for detecting the RTTs of elephants flows ;
- a statistics and controller response tracker 48 permitting to determine whether the traffic flows are conform to configured parameters or not.

The node 4 further comprises
- an ECN mark generator 46 responsible for stabilizing buffer level and/or link rate carrying elephants flows;
- a fair ECN mark scheduler 45 configured to fairly schedule selected Elephants flows on the basis of RTTs that are estimated by RTT detector 44 and the metering module 43 outputs;
- an AQM control parameter adapter 47 to apply adaptive parameters on ECN mark generator 46 in accordance with returned data by the statistics and controller response tracker 48. Then, it permits to update in a closed-loop manner the regulation parameters (rate, available network resources for example) and enforcing the ECN mark generator 46 so the network is prevented from congestion.

Indeed, the ECN mark generator 46 is in charge of estimating the packet arrival rate, since the beginning of cycle, of elephants flows that are already identified by the elephant flow detector 42. A cycle refers, here, to the time interval between two successive mark or drop events that occur in the controlled node 4. The estimation of packet arrival rate per cycle aims at adaptively adjusting the number of packets in each cycle. Moreover, the estimated rates approximate the running average bandwidth of the traffic stream over time.

Then, in order to regulate the bandwidth of individual flows or any aggregate of elastic flows, ECN mark generator 46 triggers an ECN mark or a drop event whenever a congestion is about to occur. To that end, at every packet arrival, the ECN mark generator 46 is configured to
- compute the average arrival rate since the beginning of a cycle (i.e. since the last signal was sent);
- send a congestion signal as soon as this rate is above a predefined target rate;
- repeat the congestion signal sending until the sender receives at least a congestion signal and, consequently, reacts by reducing the sending rate.

It is to be noted that whenever the average rate goes above the target rate a signal is sent and a new cycle started as soon as at least a congestion signal is received by the sender. Accordingly, packets are dropped and/or marked before buffer overflow, giving an early warning to the sources.

In one embodiment, each compound flow detected by the flows classification means 41 are monitored with the metering module 43 that comprises a token-bucket filter, or equivalently, a virtual buffer device having two adjustable parameters: burst size and maximal sustainable rate. Elephants flows (i.e. sufficiently heavy compound flows) are also monitored with an RTT detector 44. As examples, packets that exceed their token-bucket filter bounds are, for example, marked or dropped (per-flow drop-tail option), the regular self-tuning mark algorithm is applied to each aggressive elastic flow, or the maximal rates are automatically set such that, for example:
- the products (Max_Rate x RTT^a) are equal (a is a policy parameter)
- the sum of all Max_Rates is equal to "policy factor" multiplied by "link bandwidth"

Preferably, fairness policies (i.e. mark/drop policies) do not hit aggregates of mice flows (as they are generally less competitive) and cut back elephants flows (high-volume file transfer traffic such as peer-to-peer).

The per-flow features are optional as their granularity can be tuned, from no distinction at all (best-effort multiplex) to detailed distinction and classification of micro-flows. In fact, the ECN mark generator 46 may operate as RED markers when no per-flow behavior is defined.

Notably, the above rate control method works well if ECN is used, as the ECN specification dictates that a sender should reduce its rate only once each RTT, even when receiving multiple congestion signals. Persons skilled in the art will readily verify if a connection uses ECN or not. As an example of verification method, every packet of an ECN connection has at least one of the two ECN bits which is set to one, while all the packets of connections that do not use ECN have both bits set to zero.

In one embodiment, if ECN is not used, and, therefore, congestion signals are actually packet drops, multiple back-to-back drops should be avoided, as TCP senders may have a hard time recovering from multiple drops. This can be achieved by amending the rate control algorithm by introducing a finite state machine controlling the behavior of the algorithm.

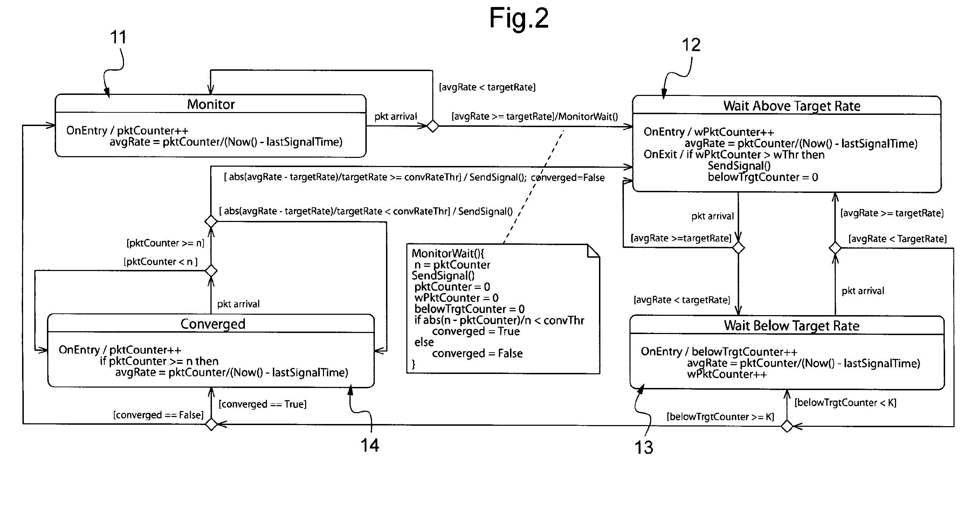

On the figure 2, there is shown an illustrative finite state machine diagram for rate control algorithm. It is an annotated UML state machine diagram of the flow rate control method.

The states WaitAboveTargetRate 12 and WaitBelowTargetRate 13 are used to prevent multiple drops. In fact, after a signal is sent the state changes from the initial state Monitor 11 to WaitAboveTargetRate 12 and the algorithm stays in this state until the average rate (since the signal was sent) goes below the target rate. At that point the states changes to WaitBelowTargetRate 13 which is used to guarantee that the average rate stays below the target rate for K packets, K being a configurable parameter. If the average rate goes again above the target rate while in the WaitBelowTargetRate 13, the state changes again to WaitAboveTargetRate 12.

The wPktCounter variable, within the WaitAboveTargetRate 12, keeps track of how many packets have arrived since the congestion signal was sent and, whenever this variable is greater than the threshold wThr, a new congestion signal is sent and this counter is reset to zero. This mechanism guarantees that the algorithm will not stay indefinitely in the WaitAboveTargetRate state 12, without sending other congestion signals. This machinery could also be used to detect non-reactive senders, that is senders that do not reduce their sending rate in the presence of congestion signals. After the arrival of K packets while in WaitBelowTargetRate 13, the state changes either to Monitor or Converged.

In one embodiment, particularly when network traffic is not changing significantly, it might be possible to avoid constantly monitoring the average rate: if there is only a small change in the number of packets in each cycle (say *n*'), a possible solution is to just keep sending a congestion signal after n' packets, without computing the average rate at every packet arrival and comparing it with the target rate. In this case all what is needed is to update the packet counter. This is what is done in the Converged state 14, aiming that the algorithm converges to a stable value of *n*. After *n*' packets have arrived, the algorithm sends a congestion signal and it computes the average rate for the cycle now ending. If this quantity is close enough to the target rate, it stays in the Converged state 14, otherwise it goes to the Monitor state 1 1, in order to compute a new value of *n*. Each time the state changes from Monitor 11 to WaitAboveTargetRate 12, the last two values of *n* are compared and, if they are close enough, the converged flag is set to true.

For a connection that supports ECN, a simplified version of the algorithm (using only the states Monitor 11 and Converged 14), avoiding the problem of detecting when a source has indeed reacted to a congestion signal, may be utilized.

In one embodiment, an estimation of RTT is used (EP09305207.4, 2009-03-05), instead of trying to determine when the source has reacted to the congestion signal. In this case, a single congestion signal is sent, then to wait 2 RTT before starting the following cycle.

In another embodiment, information about RTT, that are relevant for the global closed-loop control of elephants flows and estimated by the RTT detector 44, are extracted without access need to the reverse packet path (by using, for example, spectral techniques, periodograms, or correlograms: EP09305207.4, 2009-03-05).

It is worth noting that in the case of TCP Reno connection with large RTT's, it is indeed preferable not to send spurious congestion signals, as these connections can take a long time to recover from a mistaken rate reduction. At the same time, in these cases it is fairly easy to detect when the source has indeed reacted to the congestion signal, as the sending rate changes significantly after a congestion signal (generally, it is cut in half) and the fact that the window grows linearly implies that the sending rate changes somewhat slowly over time. Or, to be more precise, it changes at a time scale which is of the order of the RTT and not of the order of the time between packet arrivals. On the other hand, in the case of TCP Reno connections with small RTT's or of Cubic connections, it is somewhat harder to detect when the source has reduced the rate: in the case of TCP Reno, the number of packets sent during one RTT is smaller and, in the case of Cubic, the window grows much faster, leading to rapid changes in the sending rate. Furthermore, Cubic multiplies the sending window by 0.8 after a congestion signal and not by 0.5 as TCP Reno does, so that the change in sending rate is smaller. But in these cases, connections can recover fairly quickly from spurious congestion signals, limiting the impact of potential mistakes.

In an embodiment, leaky bucket schemes of flow-rate shaping are used with the disclosed method. In fact, known flow policing devices leaky buckets (or closely related token buckets) may be combined with the disclosed flow regulation technique. As in the proposed method, the large aggressive flows (elephants flows) Flow[i] (i = 1, 2, ...) are admitted with maximal target rates Rmax[i], dynamically derived from the fair bandwidth controller. Then, the packet arrivals of each flow may be monitored with a leaky bucket tuned to Rmax[i] and an appropriate burst size Burst[i]. In other words, a plurality of flows constrained to individual Rmax[i] may be simultaneously managed.

Advantageously, hardware implementation of the herein enclosed embodiments may re-use existing leaky bucket filters. In addition to color marking, they can simultaneously implement the measurement of AR[i], the average rate of flow or aggregate number i, between two successive mark/drop events for that flow.

In congestion, fairness arbitration may happen between compound flows, e.g. the sum of all flows having the same source and destination. With the rate control mechanisms, proposed here, any policy of equalizing the bandwidth-delay products (or more generally some product: rate x power of RTT) can be enforced. The flow-aware node frequently has the goal to enhance the relative QoS of mice versus elephants and so will not interfere with any flow that has, for example, ten packets or less, setting up control state variables only for longer lasting flows.

The flow-aware mechanism finds its best application when a significant part of the traffic is carried by persistent, elastic elephants flows with TCP-friendly behavior.

The AQM control parameter adapter 47 permits, at a small processing effort, to maintain the cumulative rate below a target value. It confers the node 4 a self-tuning ability (via mark/drop strategies on individual TCP connections) as a function of traffic patterns, without operator assistance.

With such algorithm, the amount of data between successive mark/drop is deterministic per flow, not a noisy random value. Instead of physical queue average size, the controlled quantities are rates, or link utilization, or virtual queue values (token buckets). The packet mark/drop algorithm of the controller is driven by the knowledge of each elephant's aggressiveness, the averaged and instantaneous arrival and drop rates and eventually its RTT, if available. The parameter update algorithm covers several decades of time with efficient implementation for frequently used parts. Adaptive state variables allow to precisely compensating the variable intrinsic delay elements (typically RTT times congestion window) of all these flows.

The herein disclosed flow-rate regulation system is mainly hierarchical, which allows decoupling sets of tasks at different time scales. Then, its implementation may be modular, organized by time scale. As examples of time scale, one can mention the following scenarios:
- time scale from RTT to a first threshold (one second for example):
   fair scheduling of mark and drop quota among flows/classes, by assigning them individual target rates, while keeping allocated rates tightly below predefined set-points;
- time scale from the first threshold to a second one (from 1 to 10 seconds for example): stabilization of the aggregate rate with an auto-adaptive controller, typically with link-load and maximal delay targets. In this range of time constants, the target values of aggregate data rate (possibly formulated as a percentage of link load) and/or of maximal queueing delay are approximated. This level-2 controller distributes corrected set-points to the shorter-time inner control loops, and in return it acquires data from these loops about the number of active aggressive flows, their average cycle times, their byte volumes between marks/drops. These measurements allow determining the best gain and integration time constant, in the typical example where the level-2 control element uses a Proportional-Integral feedback (auto-adaptive PI control);
- time scale from the second threshold to a third one (from 10 to 100 seconds for example): statistical identification of 'plant' response characteristics, acquisition of traffic properties such as mean rates and variances in different time windows, and synthesis of optimal rate-controller parameters. This may be termed the level 3 of auto-adaptation of the control system. It tracks the evolution of user traffic patterns and enhances the robustness, stability margins (and eventually speed) of the lower-level sub-controllers.

Figure 3 illustrates a fairness control loop for a large number of flows/aggregates through the communication network 100, where each of these flows benefits from individual rate control Rmax[i], according to the enclosed rate control method.

The shown embodiment permits to determine and to track a predefined maximal admissible utility value Umax, such that
- all elephants flows or aggregates obtain rate-limit set-points producing exactly this value : Rmax[i] = R(RTT[i], Umax), where the relation between utility value Umax, rate R and RTTs are fixed by a network manager;
- the sum of rate set-points for aggressive flows, plus measured rates of non-aggressive flows, is equal to the output rate set-point, that is the product of load and link rate.

The average rates of elephants are measured (step 101 of figure 3) from the network 100. This allows the computation of the sum (step 102 of figure 3) which gives as output the total measured rate. This total measured rate is compared (step 104 of figure 3) to the desired total setpoint (i.e. the global target value) that is set in 103. The difference signal (output of 104) allows the update of the maximal utility (done in 105). Once the value of Umax is obtained (output of 105), the new corrected individual setpoints for all elephants can be computed (step 106).

The maximal admissible 'utility' value Umax evolves as a function of the difference (total load supposing Umax-limited individual rates, minus link-load set-point), using an appropriate algorithm. The PI (Proportional-Integral) controller, for instance, adds to the difference term its integral over time, divided by an integration time constant Ti, and then multiplies the sum by the feedback gain Gf, to produce the new Umax value. The parameters Gf and Ti are self-adapted to the system behavior, using known techniques of linear control engineering.

Following the operator's flow-admission policy, each Flow[i] has a fixed rate function Rmax(RTT(i), Umax) which determines its maximal rate, given Umax and its estimated RTT. For example, for flat fairness Rmax[i] = Umax. If a flow's short-term average AR[i] is below its maximum, the measured average rate enters the rate sum before comparison, else the maximal allowed target value Rmax. Umax is adjusted with feedback, after aggregate output rate comparison. The new value of Umax is used to supply Rmax[i] to the leaky-bucket or the herein enclosed method controllers per flow.

Taking into account the network plus queueing delays plus the intrinsic low-pass behavior of TCP rate increase slopes, the possible stable gains and time constants in the algorithm that computes Umax are constrained. The periodically measured average rate values can be used for a comparison with target link rate at regular sampling times, for example every 100 milliseconds. An overall stable feedback value for Umax, hence for the vector Rmax[i], can be derived as a discrete-time version of the proportional-integral transfer function.

The proposed flow-rate control method can be part of a cascade of several controls, to implement collective and individual target rates and fairness policies. The system can regulate target values over several timescales, such as:
- the admissible link load, taking into account the QoS goals and the traffic burstiness;
- the fair partition of bandwidth among the flows or aggregates multiplexed on the link;
- the rate of each individual flow according to a fairness policy.

The integration of the herein described method brings a plurality of advantages:
- fair scheduling, computing and distributing a rate quota to each aggressive elephant flow. In fact, the per-flow classification information may be used to fairly partition the network resources (the available bandwidth). Then, mice connections can receive a priority boost by not being marked and dropped;
- self-tuning of proportional-integral (or other stabilizing scheme) control parameters. In fact, the proposed closed-loop flow-control methods permit an autonomic self-adaptation to expected and unexpected traffic changes and the precise control of fairness among elephants flows;
- stability as the proposed system converges to a programmable target queueing delay and/or link load, allowing the operator to tune the overall Quality-of-service of carried traffic;
- efficiency because, on a per flow scheme, a very few operations on short time scales (per packet) are needed (a modest amount of work on medium time scales of the order of RTTs, and a bit more every cycle time). Complex parameter identification for auto-adaptation may be done only every 10 seconds for example. In fact, the average computing effort per packet is lower than would be the case of an equivalent forwarding scheduler that would insure fairness on the same number of flows.

Persons skilled in the art will readily appreciate how these teachings are independent of the data transfer protocol and/or the communication network type (whatever a local or a global Area Network).

Reference throughout the specification to "one embodiment" or "an embodiment" means that a particular feature, structure or characteristic described in connection with the embodiment is included in at least one embodiment of the present invention. Thus, the appearance of the phrases "in one embodiment" or "in an embodiment" in various places throughout the specification are not necessarily all referring to the same embodiment. Furthermore, the particular features, structures, or characteristics may be combined in any suitable manner in one or more embodiments.

A second method, described in a patent application entitled "Binary search method and system for congestion avoidance" (A. Blanc, K. Avrachenkov, S. Alouf, G. Post) filed by the same applicants at the same time as the present one, tries to do a binary search on the values of packets in each cycle. Indeed, it starts by fixing an initial value of packet number per cycle, then it computes the average rate at the end of each cycle, and based on this average rate, it updates the packet number per cycle. The final goal is finding the suitable packet number per cycle that corresponds to a target rate without congestion.

## Claims

1. A method for packet flow-rate control within a network node (4) comprised within a packet-switched communication network connection linking a sender (1) to a receiver (2), the said method comprising the following steps
- computing the average arrival rate of packets since the last packet mark or drop event;
- sending a congestion signal to the sender as soon as the computed packet arrival rate is above a predefined target rate;
- repeating congestion signal sending until the sender receives at least a congestion signal and consequently reduces the sending rate.

2. The method of claim 1, wherein steps are controlled by a finite state machine.

3. The method of any of claims 1 or 2, further comprising a leaky bucket filtering step.

4. A system for packet flow-rate control within a network node (4) comprised within a packet-switched communication network connection linking a sender (1) to a receiver (2), the said system comprising an explicit congestion notification mark generator (46) configured to
- compute the average arrival rate of packets since the last packet mark or drop event;
- send a congestion signal as soon as this rate is above a predefined target rate;
- repeat the congestion signal sending until the sender (1) receives at least a congestion signal and reduces the sending rate.

5. A computer program including instructions stored on a memory of a computer and/or a dedicated system, wherein said computer program is adapted to perform the method as claimed in preceding claims 1 to 3.
